Europäisches Patentamt

European Patent Office

Office européen des brevets

(11) Publication number: **0 166 304 B1**

# EUROPEAN PATENT SPECIFICATION

(45) Date of publication of patent specification: **26.08.92**　(51) Int. Cl.5: **G06F 15/62**

(21) Application number: **85107233.0**

(22) Date of filing: **13.06.85**

---

(54) **Image processing method.**

---

(30) Priority: **25.06.84 JP 129430/84**

(43) Date of publication of application:
**02.01.86 Bulletin 86/01**

(45) Publication of the grant of the patent:
**26.08.92 Bulletin 92/35**

(84) Designated Contracting States:
**DE FR GB IT**

(56) References cited:
**GB-A- 1 547 119**
**US-A- 4 168 488**

**"Introduction to Series 32000 Architecture"
National Semiconductor corporation, October 1985.**

(73) Proprietor: **International Business Machines Corporation
Old Orchard Road
Armonk, N.Y. 10504(US)**

(72) Inventor: **Akai, Takayuki
Nikoh Heights 101 7-1 Matsugaecho
Sagamihara-shi Kanagawa-ken(JP)**
Inventor: **Yamaguchi, Junichi
Maisondoll Gyotoku 309 1-9-25 Niihama
Ichikawa-shi Chiba-ken(JP)**

(74) Representative: **Schäfer, Wolfgang, Dipl.-Ing.
European Patent Attorney, IBM Deutschland
GmbH, Schönaicher Strasse 220
W-7030 Böblingen(DE)**

## Description

The invention relates to a method for processing digital image information in a processing system with a processing system memory. Especially, the invention relates to an image processing method in which an image stored in a source area in an image memory area is processed and stored in a destination area in the image memory area.

In the image processing, it has been required to perform various image processes, such as rotation, move, mirror, etc., on an image stored in an image memory, and to store the processed image into a destination area which possibly partially overlaps the original image.

Typically, prior technology has required an additional buffer memory which temporarily stores the original image fetched from the image memory. The original image in the buffer memory was processed, and the processed image was stored in the destination area in the image memory, as suggested in the Japanese Published Unexamined Patent Application 53-42524.

As stated above, the prior technology required the additional buffer memory, whereby the cost was increased and additional image transfer steps between the image memory and the additional buffer memory and between the buffer memory and the processing unit were required. The main object of the present invention is to minimise the use of additional buffer means.

This object is solved by a method according to claim 1.

In the following the invention is described in detail with reference to the drawing which merely represents an embodiment. The figures depict the following:

| | |
|---|---|
| Fig. 1 | shows a block diagram of the image processing apparatus in accordance with the present invention; |
| Figs. 2A, 2B, 2C, 2D and 2E | show various positional layouts of the source area and the destination area in the image memory area; |
| Fig. 3 | shows the flow chart of the operation of the image processing apparatus in accordance with the present invention; |
| Figs. 4A and 4B | show the partition and processing sequence of the source and destination areas in the Copy/Move function; |
| Figs. 5A, 5B, 5C and 5D | show the partition and processing sequence of the source and destination areas in the Mirror-horizontal function; |
| Figs. 6A, 6B, 6C and 6D | show the partition and processing sequence of the source and destination areas in the Mirror-vertical function; |
| Figs. 7A, 7B and 7C | show the partition and processing sequence of the source and destination areas in the 180° Rotation function; |
| Figs. 8A and 8B | show the partition and processing sequence of the source and destination areas in the 90°/270° Rotation function. |

As stated hereinbefore, the invention intends to perform various image processes, such as copy, move, mirror horizontal, mirror vertical, 180° Rotation, 90°/270° Rotation, in which an image of a source area in an image memory area is processed and stored in a destination area in the image memory area.

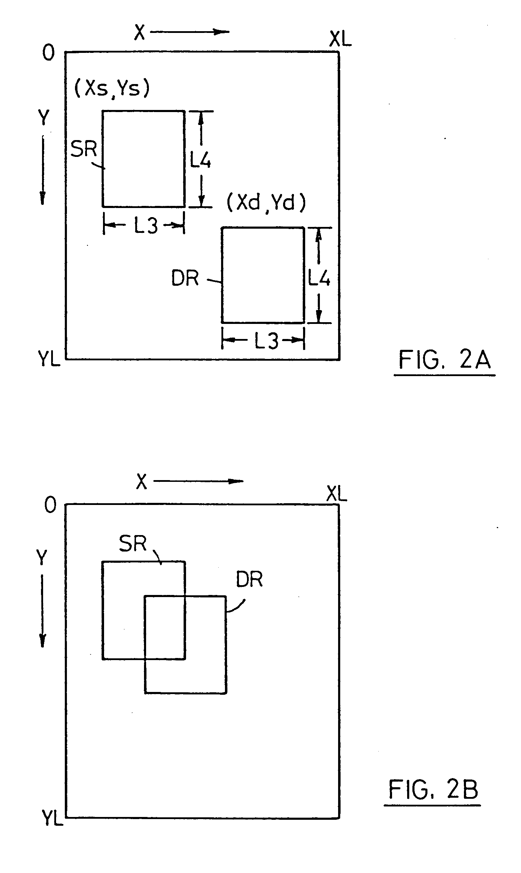

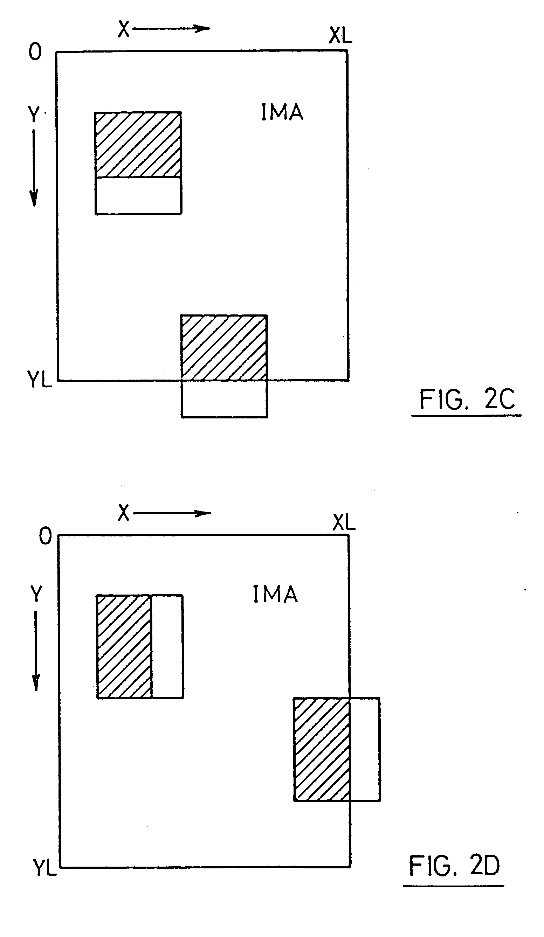

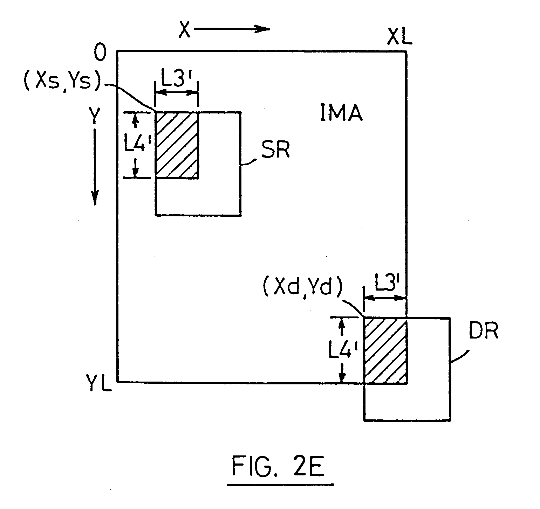

Referring to Figs. 2A, 2B, 2C, 2D and 2E, image memory area (IMA) is formed in a raw image memory. The size of the IMA is selected in accordance with a user requirement.

The addresses of the storage position within the IMA are given as shown in the drawing. The user could specify an image of any size within the IMA as a source image. For the convenience of description, it is assumed that the user specifies the source and destination images surrounded by rectangles, and these are called Source Rectangle (SR) and Destination Rectangle (DR).

The Figs. 2A, 2B, 2C, 2D and 2E show various combination of the source rectangle (SR) and the destination rectangle (DR). The user intends to fetch an image of the SR, to process the image and to store the processed image into the DR. The user could locate the DR in any place in the IMA, if the upper-left corner of the DR, i.e. coordinates in the IMA (Xd, Yd), is located within the image memory area (IMA).

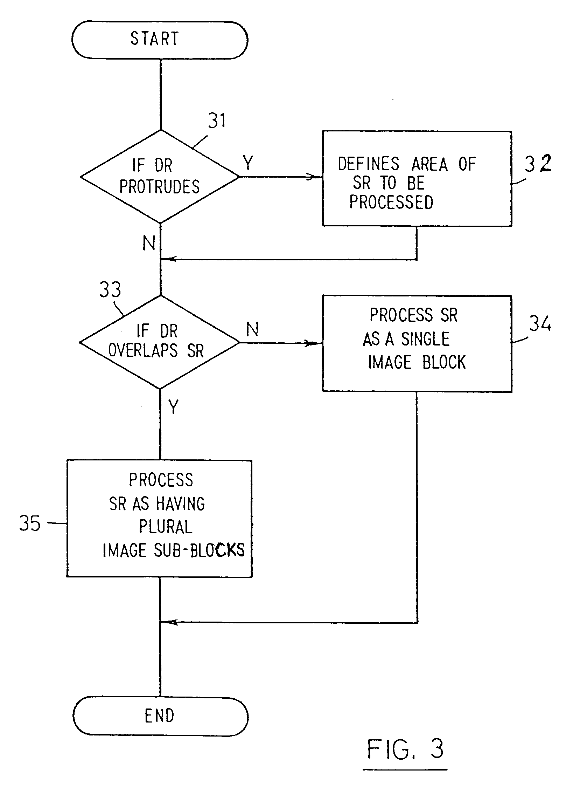

In the cases of the Figs. 2A and 2B the complete image of the SR is fetched and processed, the processed image is stored in the DR, the size of which is equal to the SR. The SR and DR are treated as the source area and the destination area, respectively. In the cases of the Figs. 2C, 2D and 2E, only a shaded portion of the DR accepts the processed image, then the fetch of the shaded image in the SR is required. The shaded images are treated as the source image and the destination image, in the succeeding image process. The determination of the protrusion of the DR, and the definition of new source area and new destination area are shown in blocks 31 and 32 of a flow chart in Fig. 3.

The next operation is performed by block 33, which determines whether the destination area overlaps the source area. The overlap of the source area and the destination area is shown in the Fig. 2B.

The overlap requires to save the overlapping SR image area before storing of the SR image into the DR image to avoid the destruction of the overlapping SR image area.

If the overlap is not found in the block 33, as shown in the Figs. 2C, 2D and 2E, the operation proceeds to a block 34. If the overlap is found, a block 35 is selected in which the source area is divided into plural image sub-blocks, and priority of the process is assigned to the image sub-blocks, and the image sub-blocks are processed in the order of the priority. The way of the division or partition and the assignment of the priority is selected in accordance with the process being performed, as later described.

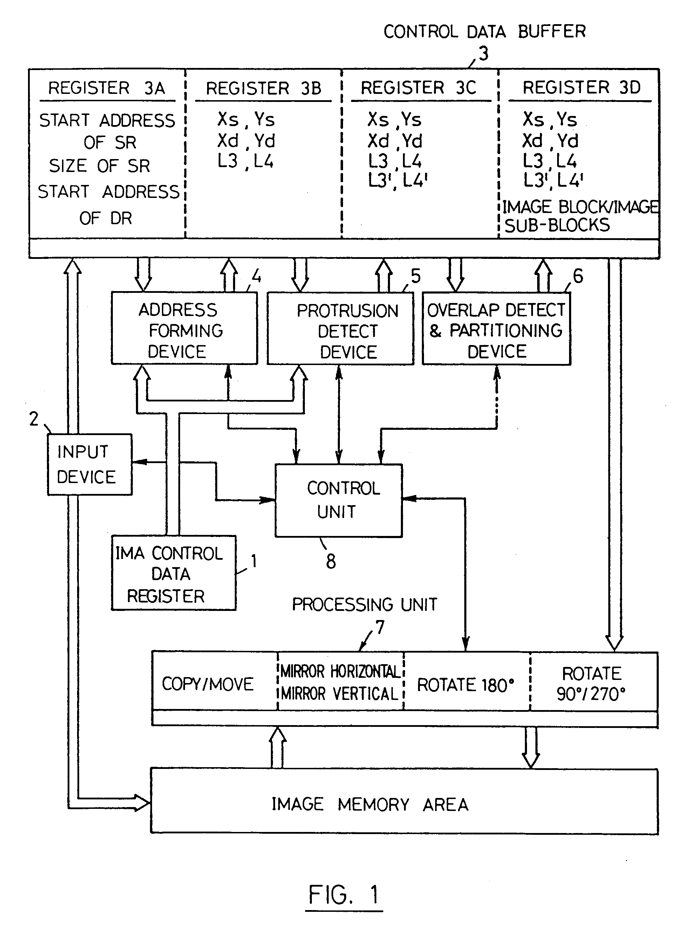

Referring to Fig. 1, an image memory area (IMA) control data register 1 stores the upper left address, shown as address "0" in Figs. 2A - 2E, of the IMA and the size of the IMA, i.e. sizes XL and YL in the raw image memory. Plural image memory areas could be formed in the raw image memory, and IMA identifiers which represent the plural image memory areas, respectively, are stored in the data register 1. An input device 2 supplies the upper left address or start coordinates $(Xs, Ys)$ and the sizes L3 and L4 of the SR, and the upper left start coordinates $(Xd, Yd)$ of the DR, to a register 3A in a control data buffer 3. These input data of the SR and DR are supplied to an address forming device 4, which generates and supplies a real address.

As of the upper left corner of the SR on the IMA, the size L3 and L4 of the SR, and the real address of the DR on the IMA are transferred to a register 3B.

The data in the register 3B are supplied to a protrusion detect device 5, which performs the operation of the decision block 31 of the Fig. 3, in the following manners.

The size XL of the IMA is compared with $Xd + L3$, and the size YL is compared with $Yd + L4$.

(a) If $XL \geq Xd + L3$, the right edge of the DR is within the image memory area IMA.

(b) If $XL < Xd + L3$, the right edge of the DR protrudes the right edge of the image memory area IMA, as shown in the Figs. 2D and 2E.

(c) If $YL \geq Yd + L4$, the lower edge of the DR is within the image area IA.

(d) If $YL < Yd + L4$, the lower edge of the DR protrudes out of the lower edge of the image area IA, as shown in the Figs. 2C and 2D.

If the protrusion detect device 5 finds the condition (a) and (c), the block 31 produces no output, which indicates the cases of Figs. 2A and 2B.

If the protrusion detect device 5 finds the conditions (b) and/or (d), the block 31 in the Fig. 3 produces YES output, and the operation goes to the block 32.

The combination of the conditions (b) and (d) indicates the three cases of the Figs. 2C, 2D and 2E in the particular case of translation only. The protrusion detect device 5 determines the size, i.e. L3' and L4' of the shaded area, based upon the values XL, YL, Xd, Yd, L3 and L4, and specifies the shaded area of the same size in the SR. The shaded area of the SR is the source area from which the image is fetched, and the shaded area of the DR is the destination area, into which the image is stored.

The start coordinates and the size of the source area and the start coordinates of the destination area are stored in a register 3C.

The operation proceeds to the block 33 in which an overlap detect and partitioning device 6 determines whether the source area, i.e. SR in the Figs. 2A and 2B or the shaded area in the Figs. 2C - 2E, is overlapped by the destination area, i.e. DR in the Figs. 2A and 2B or the shaded area in the Figs. 2C - 2E. To determine an overlap, the device 6 compares the value $Xd - Xs$ with the length in the X direction of the source area i.e. L3 or L3'; and compares the value $Yd - Ys$ with the length in the Y direction of the source area, i.e. L4 or L4'.

(e) If L3 (or L3') $= |Xd - Xs|$, the side edge of the source area adjoins to the side edge of the destination area.

(f) If L3 (or L3') $> |Xd - Xs|$, the source area is overlapped by the destination area in the X direction.

(g) If L3 (or L3') $< |Xd - Xs|$, the overlap does not occur in the X direction.

(h) If L4 (or L4') $= |Yd - Ys|$, the upper or lower edge of the source area adjoins to the lower or upper edge of the destination area.

(i) If L4 (or L4') $> |Yd - Ys|$, the source area is overlapped by the destination area in the Y direction.

(j) If L4 (or L4') $< |Yd - Ys|$, the overlap does not occur in the Y direction.

The conditions (f) and/or (i) indicate the occurrence of the overlap, and the device 6 partitions the source and destination areas into plural image sub-blocks, and assigns the priority to the sub-blocks, and processes the images, in the manner controlled by one of Copy, Move, Mirror Horizontal, Mirror Vertical, 180° Rotate and 90°/270° Rotation functions stored in a processing unit 7.

Start addresses and the sizes of the image sub-blocks are stored in a register 3D. Also, when the block 33 produces NO output, the register 3D is supplied with the start address and the sizes L3 and L4 of the both source and destination areas, each of which is processed as a single image block.

A control unit 8 is connected to each device and unit to supply various control signals and clocks to the devices and units.

Next, the detailed operation of each function performed by the processing unit 7 is described.

Copy/Move Function

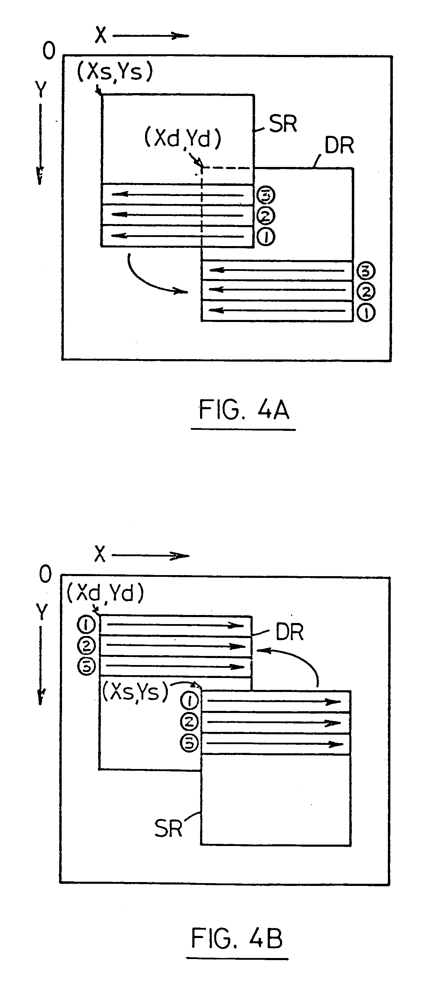

In both the Copy and Move function, an image of the source area is simply moved to the destination area, as shown in the Figs. 2A through 2E. The difference between Copy function and Move function is that the Move function requires the erase of the image of the source area, while the Copy function does not erase the image of the source area. If the source area is not overlapped by the destination area as shown in the Figs. 2A, 2C, 2D and 2E, the image of the source area is treated and processed as a single image block, as described with respect to the blocks 33 and 34 in the Fig. 3. If the overlap is detected, the source and destination areas are divided into plural image sub-blocks. And, priority 1, 2, 3 ..... is assigned to the sub-blocks, in accordance with the position of the both areas, as shown in Figs. 4A and 4B. The start address As of the source area is compared with the start address Ad of the destination area.

If "Start address As" ≤ "Start address Ad", the image of the sub-blocks of the source area are moved in the bottom-to-top sequence, as indicated by the numerals 1, 2, 3 ..... in the Fig. 4A, and the image within each sub-block is fetched in the right-to-left as indicated by an arrow in each sub-block.

If "Start address As" > "Start address Ad", the image of the source area is fetched and stored in the manner shown in the Fig. 4B, in which the sub-blocks in the source are fetched in the top-to-bottom sequence and stored in the sub-blocks of the destination area. The image in each sub-block is processed in the left-to-right direction.

Mirror - Horizontal Function

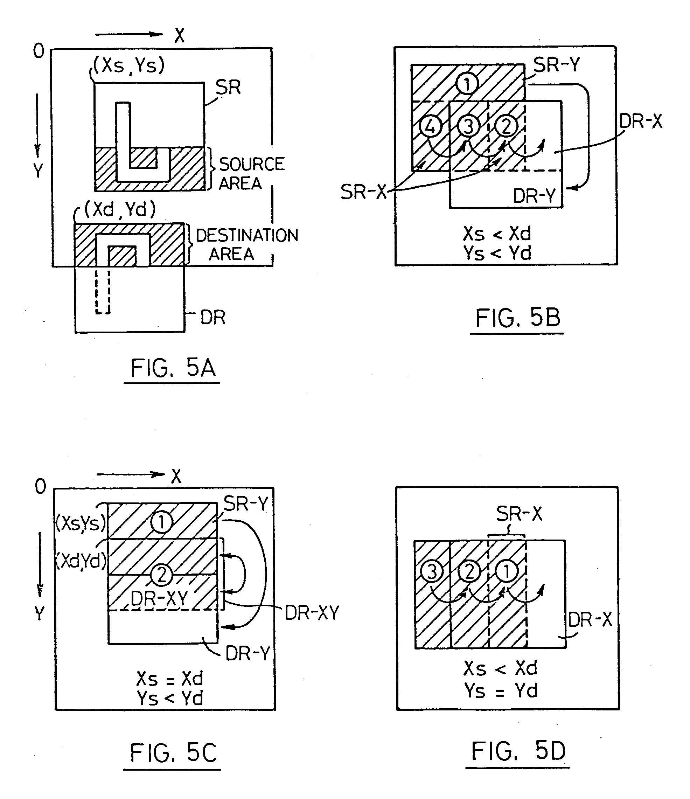

As shown in Figs. 5A, 5B, 5C and 5D, the image of the source area is converted to the upside-down image and stored in the destination area. The Fig. 5A shows the non-occurrence of overlap, and the upside-down image of the shaded source area, is stored in the destination area. The Figs. 5B, 5C and 5D show exemplary cases of the overlap, wherein the source area is shown with rough shading.

The Mirror Horizontal function includes the following steps for partitioning the overlapped areas and assigning the priority.

Step (i)

It is determined whether the destination area has a non-overlapping sub-block DR-Y in the Y direction. If found, the sub-block DR-Y is partitioned, and a corresponding sub-block SR-Y to the DR-Y is defined. If not found, the process proceeds to the next step (ii).

Step (ii)

It is determined whether the destination area has a non-overlapping sub-block DR-X in the X direction. If found, the sub-block DR-X is partitioned, and a corresponding sub-block SR-X to the DR-X is defined. And, the remaining area is divided into plural sub-blocks each of which has the same size as the sub-block DR-X as long as the remaining area is larger. If not found, the process proceeds to the next step (iii).

Step (iii)

It is determined whether the destination area has a sub-block DR-XY which overlaps on the source area in both X and Y directions. The image in the sub-block DR-XY, i.e. SR-XY, is converted to the upside-down image and is stored into the sub-block DR-XY. The priority for processing the sub-blocks is assigned to each sub-block. The images of the sub-blocks of the source area are sequentially processed in the order of priority.

Mirror - Vertical Function

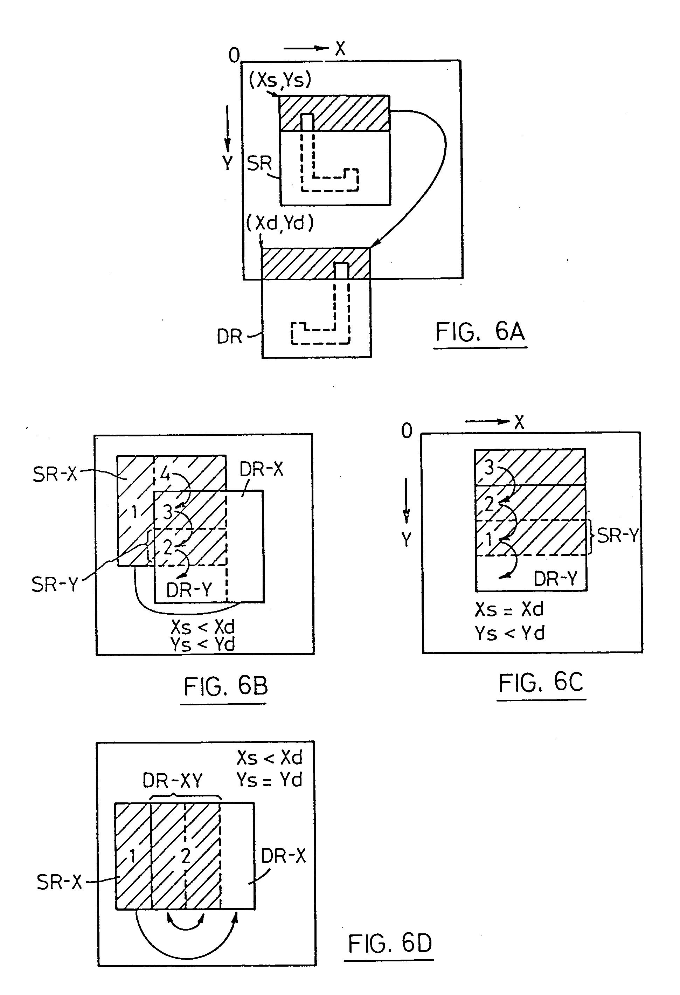

The mirror-Vertical function fetches the image of the source area, forms a mirror image with respect to a vertical axis, and stores the mirror image to the destination area, as shown in Figs. 6A, 6B, 6C and 6D. The function includes the following steps:

4

Step (i)

It is determined whether the destination area has a non-overlapping sub-block DR-X in the X direction. If found, the sub-block DR-X and SR-X are partitioned. If not found, the process proceeds to the next step.

Step (ii)

It is determined whether the destination area has a non-overlapping sub-block DR-Y in the Y direction. If found, sub-block DR-Y and SR-Y are defined. And, the remaining area is divided into plural sub-blocks, each of which has the same size as the subblock DR-Y, as long as the remaining area is larger. If not found, the process proceeds to the next step.

Step (iii)

It is determined whether the destination are has an area, i.e. sub-block DR-XY, overlapping the source area, or not. The image of the sub-block SR-XY or DR-XY is turned over in the horizontal direction, and the turned image is stored into the DR-XY. The priority for the process is assigned to each sub-block, and the images of the sub-blocks of the source area are sequentially processed in the order of priority.

180° Rotation Function

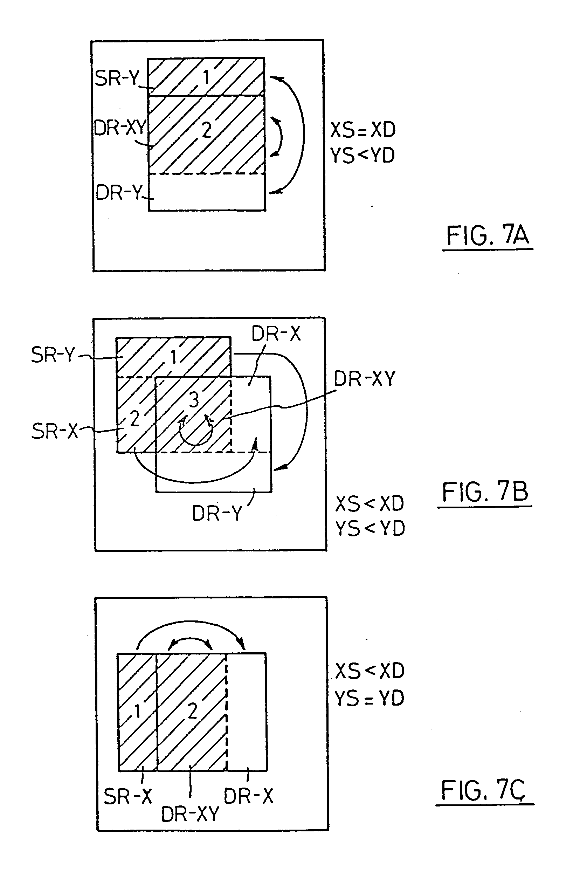

The image of the source area is 180° rotated and stored in the destination area. Figs. 7A, 7B and 7C show the 180° Rotation.

90°/270° Rotation Function

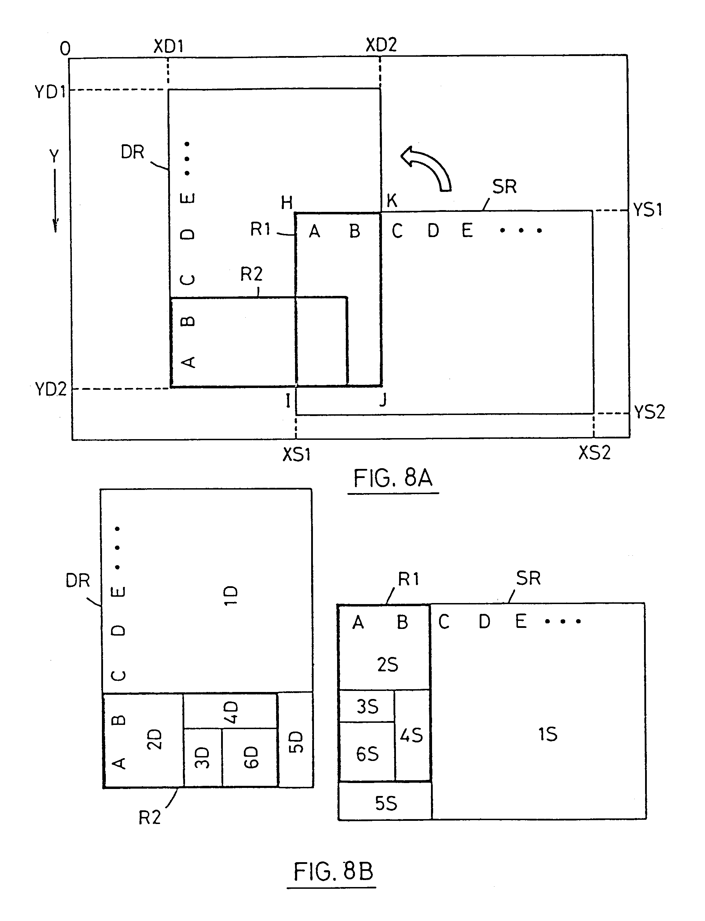

An image of the source area, e.g. SR, is rotatively moved to a destination area, e.g. DR, with 90° or 270° rotation. Fig. 8A shows that an area R1 of the SR is overlapped by the DR. The area R1 is defined by points H, I, J and K, and these points are determined by the following algorithm.

Point H (XS1, YS1)

The values XD1 and XS1 are compared, and if not equal, the larger value, i.e. XS1, is selected. The values YD1 and YS1 are compared, and if not equal, the larger value, i.e. YS1, is selected.

Point I (XS1, YD2)

The XS1 coordinate of the point H is used. The YD2 and YS2 are compared, and if not equal, the smaller value, i.e. YD2, is selected.

Point J (XD2, YD2)

The YD2 coordinate of the point I is used. The XD2 and XS2 are compared, and if not equal, the smaller value, i.e. XD2, is selected.

Point K (XD2, YS1)

The XD2 coordinate of the point J and the YS1 of the point H are used.

The area R1 of the SR is rotatively moved to the area R2 of the DR. The position data of the R2 are calculated based upon the points of the coordinates. The both SR and DR in the Fig. 8A are separately shown in Fig. 8B, for the sake of understanding.

The basic concept, the algorithm, includes steps of defining a common area, or an overlap area, between the areas R1 and R2, and partitioning the common area to one square area and the remaining area. In the examplary embodiment, the common area is divided to a square area 6S and the area 3S. It is noted that the source image in the area 3S sould be processed or saved to prevent the destruction of the image, and the source image in the square area 6S is rotated within this area 6S, and therefore, the higher priority of the process is given to the area 3S.

The area R1 is partitioned to sub-blocks 1S through 6S, and the corresponding sub-blocks 1D through 6D into which the images are stored in the following manner, are defined within the area R2.

| Source | | | Destination | |
|---|---|---|---|---|
| Sub-block 1S | ----- | | Sub-block 1D | |
| " 2S | ----- | | " 2D | |
| " 3S | ----- | | " 3D | |
| " 4S | ----- | | " 4D | |
| " 5S | ----- | | " 5D | |
| " 6S | ----- | | " 6D | |

To avoid the destruction of the source image, the algorithm finds the sub-block which should be moved or processed early, and assigns the following priority to each sub-block.
- Sub-blocks included in the R1 have higher priority than other portion within the SR.
- Sub-block 3S has a higher priority than the 4S.
- Sub-block 6S could be processed at any time.

As stated above, the square sub-block 6S overlaps on the 6D, hence the image of the sub-block 6S could be rotated within this sub-block any time.

In accordance with the invention, the image process with the reduced processing time is realized without requiring any additional hardware.

**Claims**

1. A method

for processing digital image information in a processing system with a processing system memory

to create various translation and rotation effects with regard to said image information

comprising the following steps:

establishing equal-sized and possibly partially overlapping source and destination areas in said processing system memory, where said image information to be processed is stored in said source area of said processing system memory,

determining if said source and said destination areas overlap, and

if said areas do not overlap:

processing said image information in said source area as a single integral unit and

storing said resulting processed image information in said destination area of said processing system memory, or

if said areas do overlap:

partitioning (figures 5 to 8) said source and said destination areas into possibly one sub-block which must be transformed into itself and plural pairs of source and corresponding destination area sub-blocks and assigning priorities to said pairs of source and destination area sub-blocks such that by processing each source sub-block in the sequence of its assigned priority no source sub-block is overwritten before it is processed,

transforming said image information in said source area sub-blocks in the sequence of said assigned

6

priorities,

storing said resulting processed image information in said respectively paired destination area sub-blocks in the sequence of said assigned priorities, and

processing and storing conventionally at any time said possible sub-block which must be transformed into itself.

**Patentansprüche**

1. Verfahren zur Verarbeitung digitaler Bildinformationen in einem Verarbeitungssystem mit einem Verarbeitungssystemspeicher zur Erzeugung verschiedener Translations- und Rotationseffekte bezüglich besagter Bildinformationen, folgende Schritte umfassend:

Einrichten gleichgroßer und möglichweise teilweise überlappender Quell- und Bestimmungsbereiche im Verarbeitungssystemspeicher, wobei die zu verarbeitenden Bildinformationen im Quellbereich des Verarbeitungssystemspeichers gespeichert werden,

Feststellen, ob Quell- und Bestimmungsbereiche überlappen

und, falls nein:

Verarbeiten der Bildinformationen im Quellbereich als einzelne integrale Einheit und

Speichern der sich ergebenden verarbeiteten Bildinformationen im Bestimmungsbereich des Verarbeitungssystemsspeichers

oder,

falls ja:

Unterteilen (Figuren 5 bis 8) der Quell- und Bestimmungsbereiche möglicherweise in einen Unterblock, der in sich selbst umzuwandeln ist, und eine Vielzahl von Quell- und entsprechenden Bestimmungsbereichs-Unterblockpaaren sowie Zuteilen von Prioritäten an die Quell- und Bestimmungsbereichs-Unterblockpaare, so daß durch Verarbeiten jedes Quell-Unterblocks in der Reihenfolge der ihm zugeordneten Priorität kein Quell-Unterblock vor seiner Verarbeitung überschrieben wird,

Umwandeln der Bildinformationen in den Quellbereichs-Unterblöcken in der Reihenfolge der zugeordneten Prioritäten,

Speichern der sich ergebenden Bildinformationen in den jeweils gepaarten Bestimmungsbereichs-Unterblöcken in der Reihenfolge der zugeordneten Prioritäten und

jeweiliges konventionelles Verarbeiten und Speichern des möglicherweise in sich selbst umzuwandelnden Unterblocks.

**Revendications**

1. Procédé pour le traitement d'informations numériques d'image dans un système de traitement comportant une mémoire de système de traitement, afin de créer divers effets de translation et de rotation relatifs aux dites informations d'image, comprenant les étapes suivantes :
établissement de zones d'origine et de destination, de même dimension et éventuellement en chevauchement partiel, dans ladite mémoire de système de traitement, lesdites informations d'image à traiter étant stockées dans ladite zone d'origine de ladite mémoire de système de traitement,
détermination de ce que lesdites zones d'origine et de destination se chevauchent ou non, et
si lesdites zones ne se chevauchent pas :
- traitement desdites informations d'image dans ladite zone d'origine comme une seule unité solidaire, et

- stockage desdites informations d'image traitées résultantes dans ladite zone de destination de ladite mémoire de système de traitement,

ou bien, si lesdites zones se chevauchent :

- subdivision (figures 5 à 8) desdites zones d'origine et de destination en éventuellement un seul sous-bloc qui doit être transformé en lui-même et plusieurs paires de sous-blocs de zone d'origine et de zone de destination correspondante, et attribution de priorités auxdites paires de sous-blocs de zone d'origine et de zone de destination de sorte que, par traitement de chaque sous-bloc d'origine dans la séquence de sa priorité attribuée, aucun sous-bloc d'origine n'est surchargé avant d'être traité,

- transformation desdites informations d'image dans lesdits sous-blocs de zone d'origine, suivant la séquence desdites priorités attribuées,

- stockage desdites informations d'image traitées résultantes dans lesdits sous-blocs de zone de destination respectivement associés, suivant la séquence desdites priorités attribuées, et

- traitement et stockage,de façon usuelle, à tout instant, dudit sous-bloc éventuel qui doit être transformé en lui-même.

CONTROL DATA BUFFER

3

| REGISTER 3A | REGISTER 3B | REGISTER 3C | REGISTER 3D |
|---|---|---|---|
| START ADDRESS OF SR <br> SIZE OF SR <br> START ADDRESS OF DR | $X_s$ , $Y_s$ <br> $X_d$ , $Y_d$ <br> $L_3$ , $L_4$ | $X_s$ , $Y_s$ <br> $X_d$ , $Y_d$ <br> $L_3$ , $L_4$ <br> $L_3'$ , $L_4'$ | $X_s$ , $Y_s$ <br> $X_d$ , $Y_d$ <br> $L_3$ , $L_4$ <br> $L_3'$ , $L_4'$ <br> IMAGE BLOCK/IMAGE SUB-BLOCKS |

4 ADDRESS FORMING DEVICE

5 PROTRUSION DETECT DEVICE

6 OVERLAP DETECT & PARTITIONING DEVICE

2 INPUT DEVICE

1 IMA CONTROL DATA REGISTER

CONTROL UNIT

8

PROCESSING UNIT

7

| COPY/MOVE | MIRROR HORIZONTAL MIRROR VERTICAL | ROTATE 180° | ROTATE 90°/270° |
|---|---|---|---|

IMAGE MEMORY AREA

FIG. 1

9

FIG. 2A

FIG. 2B

FIG. 2C

FIG. 2D

FIG. 2E

START

IF DR PROTRUDES — 31

Y → DEFINES AREA OF SR TO BE PROCESSED — 32

N

IF DR OVERLAPS SR — 33

N → PROCESS SR AS A SINGLE IMAGE BLOCK — 34

Y

35 — PROCESS SR AS HAVING PLURAL IMAGE SUB-BLOCKS

END

FIG. 3

FIG. 4A

FIG. 4B

FIG. 5A

Xs < Xd
Ys < Yd

FIG. 5B

Xs = Xd
Ys < Yd

FIG. 5C

Xs < Xd
Ys = Yd

FIG. 5D

FIG. 6A

FIG. 6B

FIG. 6C

FIG. 6D

FIG. 7A

XS=XD
YS<YD

FIG. 7B

XS<XD
YS<YD

XS<XD
YS=YD

FIG. 7C

FIG. 8A

FIG. 8B

18